# EUROPEAN PATENT APPLICATION

(11) **EP 3 543 086 A1**
(43) Date of publication of application: **25.09.2019**
(21) Application number: 18163369.4
(22) Date of filing: 22.03.2018
(51) Int. Cl.: B62D 15/02, B60R 21/00, G01S 13/93, G06F 7/00

(54) **METHOD FOR PREDICTING A CHANGE IN THE DIRECTION OF TRAVEL OF A VEHICLE**

(71) Applicant: Visteon Global Technologies, Inc., Van Buren Township, MI 48111-5711 (US)
(72) Inventor: Wedel, Dr. Andreas, 76139 Karlsruhe (DE); Wilmer, Thorsten, 76646 Bruchsal (DE); Shantia, Amirhossein, 76199 Karlsruhe (DE)
(74) Representative: MERH-IP Matias Erny Reichl Hoffmann Patentanwälte PartG mbB

(57) **Abstract**

The invention, which relates to a method for predicting a change in a direction of travel of a vehicle, is intended to provide a solution that may be implemented easily and cost-effectively and that permits a faster prediction to be made than is possible under the current state of the art. The problem is solved in that a current wheel angle of a wheel (4) of a vehicle is determined using a means for determining a wheel angle, characterised in that a current camera image (3) of a steerable wheel (4) of the vehicle is recorded for purposes of determining a wheel angle with a sensor (2), that a comparison of the recorded camera image (3) is made with several reference images whereby an associated wheel angle is stored for every reference image as part of a training phase, that the best possible degree of correspondence of the current camera image (3) with a reference image of the wheel angle is determined, that for wheel angles with a value of greater than zero a change in direction of travel and that in the case of a wheel angle with a value of zero no change in the direction of travel of the vehicle is predicted and that the prediction is output as an output value (6).

## Description

The invention relates to a method for predicting a change in the direction of travel of a vehicle by which the current wheel angle of a vehicle wheel is determined through the usage of a means of determining wheel angle.

Integrating driving assistance systems, or assistance systems, in vehicles, for example motor vehicles, is known. Such an assistance system is commonly understood to refer to a technical system in a motor vehicle that assists or aids the driver of the motor vehicle in driving the motor vehicle. In this context, assistance systems may contribute both to an increase is driving safety and improvements in driving comfort.

Such assistance systems may engage in areas such as the engine, steering, gas and/or brake pedal or the signalling devices in the vehicle such, as a notice in a display or a warning lamp, partially autonomously or autonomously. Alternatively, they warn drivers before or during critical driving situations. In such cases, integrating human-machine interfaces suited for such applications is common.

For such systems, or for aiding the driver, respectively, generating a prediction of a direction of travel for a vehicle, or a change in the current direction of travel of a vehicle, on a timely basis is likewise necessary. For example, this permits an immanent lane change to be predicted.

Various methods for predicting a change in the direction of travel of a vehicle are known based on the state of the art.

A system and method for predicting driver behaviour and generating control and/or warning signals is known from US 2008 0167820 A1 whereby the comprises one or more sensors, a database, a driver predictor for generating warning and control signals, a notification unit and a vehicle control unit.

The intent is to translate received data into a form that may be stored in a hierarchical temporal memory. The hierarchical temporal memory receives data input and stores it such that data items are translated into short-term memory items which are in turn translated into intermediate-term data which in turn are finally translated into long-term data.

The translation of data from one level of the memory to another is performed according to the present invention such that the data at each level of memory is reflective of and predictive of a particular driver behaviour. Once the data is stored in the memory, the prediction retrieval module accesses the hierarchical temporal memory to generate warning signals to alert the driver of potentially dangerous conditions and/or control systems of the vehicle to prevent or avoid collisions.

A method and apparatus for predicting a movement trajectory is known from US 2009 0076702 A1. In order to be able to undertake a reliable prediction of a movement trajectory of an object moving in road traffic even for relatively long prediction periods, a method is proposed in which there is firstly determined with the aid of an evaluation of a determined movement variable of the object a driving manoeuvre that is executed by the object.

A model of the movement of the object is then selected as a function of the determined driving manoeuvre, and the movement trajectory of the object is calculated with the aid of the selected model. There is also proposed an apparatus for predicting the movement trajectory of an object that is suitable for carrying out the method. The object can be both a motor vehicle and an object in the surroundings of the motor vehicle.

A traveling-path prediction apparatus and method for vehicles that detects a stationary object in front of the vehicle by utilizing an obstacle detection device and predicts a traveling path based on the detected stationary object is known from US 5745870 A.

The apparatus comprises control unit having an obstacle detection device which receives a detection signal from a radar head unit to detect an obstacle in front of the vehicle, stationary object detection device which receives an output signal from the obstacle detection device to detect the obstacle as a stationary object, a first traveling-path prediction device which receives an output signal from the stationary object detection device, and if there is a stationary object in front of the vehicle, calculates a radius of curvature of a first traveling path, based on data indicative of running conditions of the vehicle.

The invention also comprises a second traveling-path prediction device which calculates a radius of curvature of a second traveling path, based on a velocity and a steering angle, and a selection device which receives a detection signal from the radar head unit and if there is no stationary object in front of the vehicle, selects the second traveling path calculated by the second traveling-path R2 prediction device.

A vehicular steering control unit is known from US 9248856 B2 that comprises a steering wheel with a torque sensor, electric power steering with an actuator to effect steering movement in the wheels of a vehicle, a torque angle sensor as well as a calculation unit. The calculation unit is electrically connected to the torque sensor on the steering wheel as well as with the torque angle sensor and includes data that describes a pre-defined path of travel for the vehicle. By means of the pre-defined path of travel for the vehicle and the steering movement that may be adjusted by the sensors, it is possible to recognise a potential deviation from the pre-defined path of travel and, in the case of a deviation that is equal to or larger than a pre-defined target value, initiate appropriate measures to correct the path of travel of the vehicle. This state of the art likewise discloses the use of a camera as sensor for purposes of determining a wheel angle.

Based on the state of the art, there is no known possibility of permitting the prediction of vehicle movement by means of a wheel angle observed by a camera. Essentially, objects are measured in their relative position and their future movement is predicted based on the observed movement of such objects. Accordingly, there is need for a solution that permits the prediction of a direction of travel for such objects before the direction of travel of the object changes and/or noticeably changes.

The objective of the invention is to provide a method for predicting a change in a direction of travel of a vehicle that may be implemented easily and cost-effectively and that permits a faster prediction to be made than is possible under the current state of the art.

The objective is achieved by means of a method with the characteristics according to patent claim 1 of the independent patent claims. Further embodiments are described in the dependent patent claims 2 to 7.

The intent of the invention is to predict a change in the direction of travel of a vehicle and/or a lane change. For purposes of this prediction, a so-called wheel angle of a steerable wheel of a vehicle is determined in order to predict the maintenance or change in the direction of travel of a vehicle. In this context, a change in the direction of travel of a vehicle is understood, for example, as a deviation in vehicle movement from a current state of straight movement, whereby a change in the current direction of travel to the left or to the right is possible.

Similarly, in the case where a vehicle is travelling in a so-called trajectory that describes a circular path for a period of time for example, use of the method may predict a departure from this circular path as well as the direction in which the departure from the circular path will take.

The term wheel angle is defined as the current position of a steerable wheel of a vehicle. This wheel angle may, for example, evidence a wheel angle of 0° in the event the wheel is in a straight-ahead position. If the wheel is moved to the right, for example by means of a steering movement, the wheel assumes a position with a positive wheel angle whereas the wheel assumes a position with a negative wheel angle in the event that the steering movement is to the left. The greater the steering movement directed at the wheel, the larger the degree of the wheel angle.

The term wheel, also referred to as the complete tyre assembly, is commonly understood to comprise unit made up of a rim and a tyre.

The method determines the current wheel angle of a steerable wheel of a vehicle and is thus able to predict a change in the direction of travel of the vehicle before the vehicle noticeably moves in the direction caused by steering or the steering angle of the steerable wheels. Accordingly, the prediction is made before the vehicle deviates from its current direction of travel and/or trajectory.

For this purpose, the intent is to create a current camera image via a sensor such as a video camera that shows one of the steerable wheels of a vehicle. Several different reference images were recorded during a training phase in preparation of executing the method. These reference images show a steerable wheel in a certain position which the wheel has assumed by setting a pre-defined wheel angle. This permits the wheel angle associated with reference image to be stored. During this training phase, a number of reference images with their associated wheel angles are stored, for example in a database or in other memory as a data set or reference image data set. An additional option is to create and store a reference image data set for each of two wheels during the training phase. In this context for example, a first reference image data set is created for a right wheel and/or front wheel and a second reference image data set is created for a left and/or front wheel of a vehicle whereby both wheels are arranged on one axle of the vehicle.

When executing the method for predicting a change in a direction of travel of a vehicle, a newly-created camera image is compared with a large number of reference images created during the training phase and thus the best possible-degree of correspondence between the current camera image and a reference image, and thus the current wheel angle, is determined.

Using the wheel angle determined in this manner, provided that the current direction of travel and/or trajectory of the vehicle is known, it is possible to make a prediction as to whether the vehicle is going to change its direction of travel, i.e. whether it will deviate from its current trajectory. Furthermore, the direction of the deviation from the current direction of travel and/or trajectory may be predicted based on a known wheel angle. This information is generated by the method and is reported as an output value.

The intent is likewise to generate two current camera images of two steerable wheels of a vehicle using two cameras. Using the method described above, these current camera images are compared with the respective corresponding reference image of a first and of a second reference image data set and thus a wheel angle for the right and a wheel angle for the left steerable wheel of a vehicle is determined. By means of the wheel angles determined in this manner, two predictions regarding a change in the direction of travel of the vehicle may be generated and output. This permits the accuracy of the prediction to be improved.

The intent is also to create a mean value based on the wheel angle determined for the right steerable wheel and the wheel angle determined for the left steerable wheel of a vehicle. In such cases, the prediction of a change in the direction of travel for the vehicle would be made subsequently subject to the use of the mean value calculated for the wheel angle.

The intent is to predict an immanent lane change or an immanent crossing of a road marking on the basis of a prediction of a change.

The output value of the method may be provided to other assistance systems in the vehicle. For example, the information from the output value could be used by an emergency braking system (Active Brake Assist; ABA), a distance control system (Adaptive Cruise Control; ACC) or an automated driving system. It advantageous for the output value, for example, to indicate an immanent lane change at an early time than would be the case based on the object position and prior trajectory as is known from the state of the art. As a result, such systems could initiate measures such as braking and/or avoidance at an earlier time.

Such information may, for example, also be transmitted via a so-called Car-to-Car Communication (Car2Car or C2C) to other road users who would in turn initiate their own measures. In this context, in addition to the measures mentioned above, it is even conceivable that such other road users could briefly accelerate in order to create space in order to avoid a collision.

Thus, for example autonomous vehicles equipped with this technology could operate cooperatively with vehicles without this technology that are driven manually or with incompatible systems.

The information contained in this output value may also be displayed in an output device such as a heads-up display.

An additional example represents the use of this output value in an automated driving system that recognises a lane change by a following vehicle using such output value and in turn does not execute a passing manoeuvre because the vehicle travelling behind is going to pass.

Additional details and benefits of embodiments of the invention may be found in the following description of sample embodiments with reference to the drawings associated therewith. They show:
- **Fig. 1:**: A variation for implementing the method according to the invention for predicting a change in a direction of travel of a vehicle;
- **Fig. 2:**: An example of a position of a steerable wheel in a first status with a steering movement of the wheel to the left captured by a camera and
- **Fig. 3:**: A second example of a position of a wheel in a second status with a steering movement of the wheel to a straight-ahead position captured by a camera.

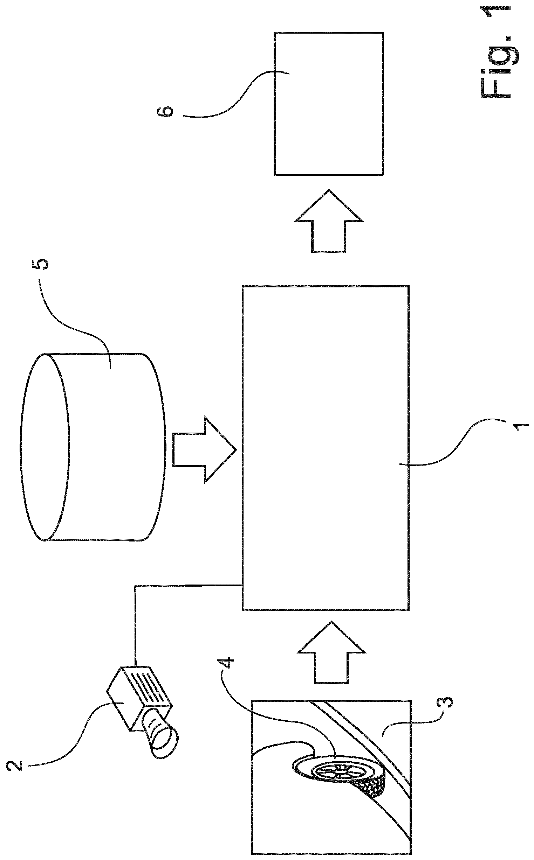

**Figure 1** depicts a variation for the implementing the method according to the invention for predicting a change in a direction of travel of a vehicle with a central processing unit 1 which controls the sequence of the method according to the invention. For such purposes, the central processing unit 1 is equipped for example with a memory not depicted here in which programme instructions to be executed are filed and/or stored in a common form. At a minimum, these programme instructions include the process steps needed for the method.

The central processing unit 1 is connected with a sensor 2 which is in the form of a camera as shown in the example of Figure 1. This sensor 2 and/or camera is arranged such that it may capture a camera image 3 of a steerable wheel of a motor vehicle.

In order to implement the method for predicting a change in a direction of travel of a vehicle, the central processing unit 1 is connected with a memory or a database 5 for example. This memory or database 5, as applicable, includes several data sets that represent, for example, an image of a steerable wheel 4 with an associated wheel angle. Such an image is also referred to as a reference image. In this manner, for example, a variety of reference images of the steerable wheel 4 along with their associated wheel angles are stored in a so-called reference image data set.

The memory can comprise an external memory. Alternatively, the memory can be arranged as a memory integrated into the central processing unit 1. The data may be stored as single values and/or in a database.

The central processing unit 1 may determine the reference image with the best conformity and in such a manner determine the current wheel angle of the wheel 4 that is in proximity to camera 2 by making a comparison between a current camera image 3 recorded and provided by camera 2 and the reference images stored in the database 5. Based on the results of this comparison or image comparison, the central processing unit 1 outputs an output value 6 which describes a deviation from the current direction of travel or vehicle trajectory or the maintenance of the current direction of travel or vehicle trajectory. In this manner the central processing unit 1 may, for example, predict an immanent lane change even before it actually occurs. This is possible because there is a temporal delay between the change in the wheel angle and the travel of the vehicle in the direction determined by the wheel angle.

This output value 6 can, for example, be receive by an assistance system installed in the vehicle and, for example, be interpreted as an input value. In one example, the output value 6 may be used in a lane departure warning system in order to indicate an immanent lane change.

In addition to its function for indicating an expected change in the direction of travel and/or vehicle trajectory of the vehicle, the output value 6 may include information about the direction of travel. For example, this may permit the central processing unit 1 to recognise a change in the direction of travel and/or the vehicle trajectory of the vehicle to the left or to the right and output as and output value 6.

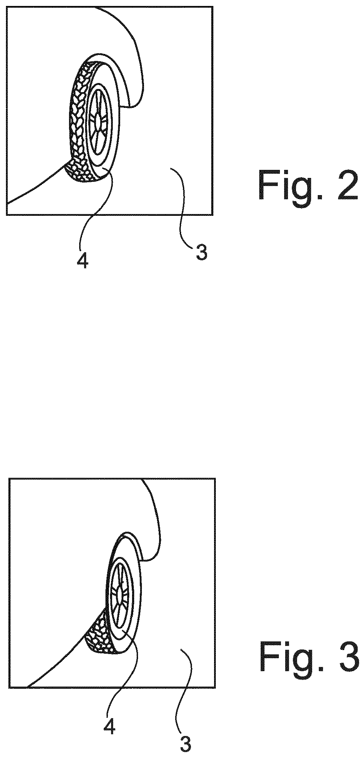

**Figure 2** depicts an example of a position of a wheel 4 in a first position recorded in a camera image 3 by camera 2 with a steering movement of the wheel 4 to the left. For example, after completion of the system necessary for the method, comprising a vehicle with at least one steerable wheel 4, the camera 2 and the central processing unit 1 with an associated memory 5, the intent is to adapt the system to the vehicle and/or the corresponding vehicle constellation during a training phase. To that end, reference images will be recorded with regard to several pre-set known wheel angles by means of camera 2 and to save them as a data set or reference image data set. Determining reference images in this manner may, for example, be made in each case after a change in the wheel angle of for example 5°, 3° or 1° (degrees). For example, as part of this process the position of wheel 4 in a straight-ahead position may be assigned a wheel angle of 0°. Setting the wheel 4 with a first wheel angle that evidences a positive sign, for example a wheel angle of +3°, may be assigned to a steering wheel movement or a steering movement to the right. Setting the wheel 4 with a second wheel angle that evidences a negative sign, for example a wheel angle of -3°, may be assigned to a steering wheel movement or a steering movement to the left. This assignment may be made in reverse order if needed.

Adapting the system to the vehicle or the vehicle constellation may, for example, also be required after a tyre change. A change in the vehicle constellation may also be caused by a change in selection of the rims used for the wheel 4 or a change in the suspension travel of a chassis.

Alternatively, different vehicle constellations, i.e. different combinations of tyres, rims, chassis, for a reference vehicle may be determined for each training phase. Based on the different vehicle constellations, for which the respective reference images were stored and/or saved as a reference image data set, a corresponding reference image data set may be selected and, for example, transferred to a memory 5 in a vehicle that is to be finished as part of the manufacturing process.

Figure 3 depicts an example of a position of a wheel 4 in a second position in a camera image recorded by camera 2. In this position, the wheel 4, comprising a rim with a tyre, shows a wheel angle of 0°, the wheel 4 is thus in a position suitable for straight-ahead travel. In the case that the instant method for predicting a change in a direction of travel of a vehicle determines a wheel angle of 0°, an output value 6 is output by the central processing unit 1 that displays and/or predicts no change in the direction of travel of the vehicle, i.e. a continuation of the movement of the vehicle in the current direction of travel and/or along the current trajectory.

In the case that the instant method for predicting a change in a direction of travel of a vehicle determines a wheel angle of +3° for example, an output value 6 is output by the central processing unit 1 that displays and/or predicts a change in the direction of travel of the vehicle: in this case a change in the current direction of travel of the vehicle to the right viewed from the direction of travel. In such cases, the vehicle will depart from its current trajectory and deviate from it to the right.

In the case that the instant method for predicting a change in a direction of travel of a vehicle determines a wheel angle of -2° for example, an output value 6 is output by the central processing unit 1 that displays and/or predicts a change in the direction of travel of the vehicle: in this case a change in the current direction of travel of the vehicle to the left viewed from the direction of travel. An example of such a wheel angle and/or a corresponding position of the right front tyre of the motor vehicle in this position is depicted in Figure 2. In such cases, the vehicle will depart from its current trajectory and deviate from it to the left.

One example of an application of the method for predicting a change in the direction of travel of a vehicle calls for the usage of a so-called convolutional neural network (CNN). These types of networks as known from the state of the art permit the automated processing of image and audio files and may thus provide an advantage when used to determine the wheel angle based on a recorded camera image 3.

The intent is to record a camera image 3 via a camera arranged on the vehicle.

It is furthermore possible to use a camera installed on the side, front or rear of another vehicle in order to record a camera image of a steerable wheel 4 of the own vehicle. In this embodiment, the recorded camera image 3 may be transferred to the own vehicle. Alternatively, the method for predicting a change in a direction of travel of a vehicle may also be used in the other vehicle.

For example, when a CNN is used, the first step involves recognition of a vehicle within the field of view of the deployed camera 2. If the position of the vehicle is known localised within a so-called first area of a "bounding box", an area of interest and/or a second area is specified within the first area of the "bounding box" in which the vehicle's wheels must be located. In this case, the second area in which a steerable wheel 4 is expected is of particular interest.

Subsequently, a current camera image 3 or multiple camera images 3 of the steerable wheel 4 are recorded in the second area. The prediction and/or output value 6 is determined by means of the manner described above by the CNN by means of a comparison between the current camera image 3 and the reference images. For purposes of providing the reference images in a reference image data set, a vehicle equipped with a camera is driving in front of, behind and next to a vehicle making a lane change thus creating multiple reference image data sets to be processed by the CNN.

In one embodiment, the first step of recognising a vehicle within the field of view of deployed camera 2 may be accomplished using technologies such as CNN on PASCAL VOC, an ImageNET or an MS COCO.

### Reference numeral index

- 1: Central processing unit
- 2: Sensor / Camera
- 3: Camera image
- 4: Wheel
- 5: Database / Memory
- 6: Output value

## Claims

1. Method for predicting a change in a direction of travel of a vehicle by which a current wheel angle of a wheel (4) of a vehicle is determined using a means for determining a wheel angle, **characterised in that** a current camera image (3) of a steerable wheel (4) of the vehicle is recorded for purposes of determining a wheel angle with a sensor (2), that a comparison of the recorded camera image (3) is made with several reference images whereby an associated wheel angle is stored for every reference image as part of a training phase, that the best possible degree of correspondence of the current camera image (3) with a reference image of the wheel angle is determined, that for wheel angles with a value of greater than zero a change in direction of travel and that in the case of a wheel angle with a value of zero no change in the direction of travel of the vehicle is predicted and that the prediction is output as an output value (6).

2. Method according to claim 1, **characterised in that** in the case of a wheel angle with a first sign a change of the direction of travel of the vehicle in a first direction of change is predicted and that in the case of a wheel angle with a second sign a change of the direction of travel of the vehicle is predicted.

3. Method according to claim 2, **characterised in that** the first sign is a positive sign, the second sign is a negative sign, the first direction of change is to the right and the second direction of change is to the left.

4. Method according to claims 1 to 3, **characterised in that** two current camera images (3) of two steerable wheels (4) of a vehicle are recorded and that a comparison is made of each of the recorded camera images (3) with multiple reference images of an associated reference image data set and that the two wheel angles are determined.

5. Method according to claim 4, **characterised in that** a mean value is determined on the basis of the two specified wheel angles.

6. Method according to one of claims 1 to 5, **characterised in that** the output value (6) comprises and input parameter for an assistance system contained in a vehicle.

7. Method according to one of claims 1 to 5, **characterised in that** the current camera image (3) of a steerable wheel (4) of a vehicle is recorded by means of a video camera.

8. Method according to claim 7, **characterised in that** the video camera is arranged as a front, rear or side camera on a second vehicle that is in front of, behind or next to the vehicle for which a change in the direction of travel is to be predicted.

9. Method according to claim 8, **characterised in that**, using a convolutional neural network (CNN), a first area in the field of view of the video camera is first localised in which a vehicle is located, that thereafter a second area is localised within this first area in which a steerable wheel (4) is located and that a current camera image (3) is recorded within this second area.

10. Method according to one of claims 1 to 9, **characterised in that** the output value (6) of another road user is transferred whereby car-to-car communications (C2C) is used.
